# EUROPÄISCHE PATENTANMELDUNG

(11) **EP 2 927 761 A1**
(43) Veröffentlichungstag der Anmeldung: **07.10.2015**
(21) Anmeldenummer: 15161810.5
(22) Anmeldetag: 31.03.2015
(51) Int. Cl.: G05B 19/042, G06F 21/10

(54) **VERFAHREN ZUM KONFIGURIEREN EINES HAUSHALTSGERÄTS SOWIE HAUSHALTSGERÄT**

(30) Priorität: 04.04.2014 DE 102014206602
(71) Anmelder: BSH Hausgeräte GmbH, 81739 München (DE)
(72) Erfinder: Pfeifferer, Markus, 93059 Regensburg (DE); Bosen, Peter, 93161 Sinzing (DE)

(57) **Zusammenfassung**

Die Erfindung betrifft ein Verfahren zum Konfigurieren eines Haushaltsgeräts (1), bei welchem das Haushaltsgerät (1) mit einer Basisausstattung von Betriebsfunktionen herstellerseitig bereitgestellt wird, und Betriebsfunktionen jeweils abhängig von zugeordneten bereitgestellten Betriebsprogrammen aktiv ausgeführt werden können, wobei das Haushaltsgerät (1) durch ein nutzerindividuelles Auswählen zumindest eines Betriebsprogramms zum Ausführen der zugeordneten Betriebsfunktion und durch Übertragen des nutzerseitig bestimmten Betriebsprogramms auf ein Steuergerät (2, 5) zum Steuern des Haushaltsgeräts (1) konfiguriert wird. Die Erfindung betrifft auch ein Haushaltsgerät (1) und ein System (I) mit einem Haushaltsgerät (1).

## Beschreibung

Die Erfindung betrifft ein Verfahren zum Konfigurieren eines Haushaltsgeräts, bei welchem das Haushaltsgerät mit einer Basisausstattung von Betriebsfunktionen herstellerseitig bereitgestellt wird. Die Betriebsfunktionen des Haushaltsgeräts können jeweils abhängig von zugeordneten und bereitgestellten Betriebsprogrammen ausgeführt und somit im Ablauf gesteuert werden. Des Weiteren betrifft die Erfindung ein Haushaltsgerät.

Haushaltsgeräte zur Pflege von Wäschestücken oder zum Reinigen von Geschirr oder zum Zubereiten von Lebensmitteln oder zum Lagern und Konservieren von Lebensmitteln sind in Form von Waschmaschinen, Wäschetrocknern, Geschirrspülern, Kochfeldern, Backöfen, Mikrowellengargeräten, Dampfgargeräten, Kühlgeräten, Gefriergeräten oder Kühl-Gefrier-Kombigeräten bekannt. Herstellerseitig werden hier üblicherweise jeweils eine Vielzahl von unterschiedlichen Typen beziehungsweise Varianten angeboten und können von einem Benutzer erworben werden.

Üblich ist es hierbei, dass diese verschiedenen Varianten eines Haushaltsgeräts auch eine unterschiedliche Ausstattung von aktiv nutzbaren und somit auch durchführbaren Betriebsfunktionen, die jeweils über zumindest ein Betriebsprogramm in ihrem Ablauf gesteuert werden, ausgestattet sind. Üblich ist es hier auch, dass unterschiedliche Varianten zu unterschiedlichen monetären Preisen, also unterschiedlichen Kaufpreisen oder unterschiedlichen Mietpreisen oder unterschiedlichen Leasingpreisen, angeboten werden. Da diese individuellen Funktionsausstattungen der einzelnen Varianten jedoch herstellerseitig fest vorgegeben sind, ist den individuellen Nutzerbedürfnissen nur eingeschränkt Rechnung getragen.

Es ist Aufgabe der vorliegenden Erfindung, ein Verfahren sowie ein Haushaltsgerät zu schaffen, mit welchem beziehungsweise bei welchem die Möglichkeit einer nutzerindividuellen Ausstattung eines Haushaltsgeräts verbessert ist.

Diese Aufgabe wird durch ein Verfahren und ein Haushaltsgerät gemäß den unabhängigen Ansprüchen gelöst.

Bei einem erfindungsgemäßen Verfahren zum Konfigurieren eines Haushaltsgeräts wird das Haushaltsgerät zunächst herstellerseitig mit einer Basisausstattung von Betriebsfunktionen bereitgestellt. Betriebsfunktionen werden jeweils abhängig von zugeordneten und bereitgestellten Betriebsprogrammen ausgeführt und somit der Ablauf der Betriebsfunktion durch die zugeordneten Betriebsprogramme auch gesteuert. Ein wesentlicher Gedanke der Erfindung ist darin zu sehen, dass das Haushaltsgerät durch ein nutzerindividuelles Auswählen zumindest eines Betriebsprogramms, welches einer Betriebsfunktion zu deren Ausführung zugeordnet wird, und durch Übertragen des nutzerseitig bestimmten beziehungsweise ausgewählten Betriebsprogramms auf ein Steuergerät zum Steuern des Haushaltsgeräts nutzerindividuell konfiguriert wird. Durch eine derartige Ausgestaltung kann individuellen Bedürfnissen eines Nutzers verbessert Rechnung getragen werden, da dieser selbst vorgeben und bestimmen kann, welche Betriebsfunktionen eines Haushaltsgeräts, welches er nutzen möchte, tatsächlich dann auch aktiv durchgeführt werden können und ablaufen können.

Dadurch kann sich ein Nutzer individuell durch modulartiges Auswählen und Zusammenstellen von Betriebsprogrammen und ein nachfolgendes dann Übertragen dieser Betriebsprogramme auf das Steuergerät das Haushaltsgerät im Hinblick auf die aktive durchführbaren Betriebsmöglichkeiten sehr bedürfnisgerecht für sich gestalten. Dadurch kann auch sehr nutzerspezifisch sowohl die Anzahl der dann über die Betriebsprogramme ablaufgesteuerten Betriebsfunktionen als auch die Art der dann auch aktiv durchführbaren Betriebsfunktionen individuell festgelegt werden. Dadurch kann auch individuellen Betriebsbedürfnissen eines Nutzers bezüglich des genutzten Haushaltsgeräts verbessert Rechnung getragen werden. Denn es kann in dem Zusammenhang beispielsweise auch verhindert werden, dass durch eine Vielzahl von möglichen Betriebsfunktionen, die über zugeordnete Betriebsprogramme auch tatsächlich am Haushaltsgerät durchgeführt und ablaufen können, eine Überfrachtung für den Nutzer auftritt und dieser mit der Bedienung des Haushaltsgeräts überfordert ist. Durch die Erfindung kann Entsprechendes verhindert werden, und dadurch wird auch die Bedienerfreundlichkeit und Nutzerfreundlichkeit erhöht.

Bei den üblichen bisher bekannten Haushaltsgeräten kommt es durch die fest vorgegebenen herstellerseitig definierten Betriebsfunktionen, die dann auch aktiv über zugeordnete und herstellerseitig bereits installierte und unveränderbare Betriebsprogramme durchgeführt werden können, bei den einzelnen Varianten eines Haushaltsgeräts zu Unterschieden. In dem Zusammenhang tritt nicht selten die Situation auf, dass ein Nutzer eine Mehrzahl von Betriebsfunktionen einer Variante eines Haushaltsgeräts positiv für sich bewertet und diese gerne bei seinem Gerät hätte, andere Betriebsfunktionen dieser ersten Variante des Haushaltsgeräts jedoch nicht benötigt oder von untergeordneter Wichtigkeit ansieht. Andererseits würde er jedoch Betriebsfunktionen, die diese erste Variante des Haushaltsgeräts nicht aufweist, an seinem sich vorstellenden Haushaltsgerät gerne haben, wobei dann diese weiteren gewünschten Betriebsfunktionen gegebenenfalls nur bei einer zweiten Variante dieses Haushaltsgeräts zur Verfügung stehen. Der Nutzer steht daher in der gegenwärtigen Situation vor der Entscheidung, sich für eine Variante des Haushaltsgeräts entscheiden zu müssen, hat dann jedoch jeweils nur eine suboptimale Lösung für seine tatsächlichen Bedürfnisse. Durch die Erfindung wird auch dieser Nachteil behoben, denn durch die individuelle Konfigurationsmöglichkeit bezüglich der Betriebsfunktionen und zugeordneter Betriebsprogramme kann dann ein Haushaltsgerät gestaltet werden, welches den Nutzerwünschen maximal nahekommend mit den Betriebsfunktionen, die dann durch die herunter geladenen und übertragenen Betriebsprogramme aktiv durchgeführt werden können, zusammengestellt ist.

In diesem Kontext der Erfindung sind als Betriebsfunktionen insbesondere Funktionen zu verstehen, die den grundlegenden Betrieb eines spezifizierten Haushaltsgeräts definieren. Beispielsweise ist bei einem Haushaltsgerät zur Pflege von Wäschestücken, wie beispielsweise bei einer Waschmaschine, eine derartige Betriebsfunktion ein Pflegeprogramm der Wäsche ist. Wobei in dem Zusammenhang auch das Schleudern und somit Drehen der Wäschetrommel, das Einleiten von Spülwasser in den Laugenbehälter beziehungsweise in die Wäschetrommel, das Einspülen von Waschmittel in den Laugenbehälter oder die Wäschetrommel hierzu wesentlich ist und das Betriebsprogramm eines Pflegeprogramms diese Abläufe vorgibt bzw. über ein Steuergerät steuert.

Darüber hinaus ist beispielsweise bei einem Wäschetrockner auch das Einblasen und Zirkulieren von warmer Luft in die Trocknungskammer, in der sich die zu trocknenden Wäschestücke befinden, als Bestandteil eines Pflegeprogramms anzusehen.. Auch hier ist das Drehen der Wäschekammer beziehungsweise Wäschetrommel dann durch ein Betriebsprogramm im Ablauf vorgesehen und steuerbar.

Bei einem Backofen ist beispielsweise durch die Option eines Heißluftbetriebs, eines Umluftbetriebs, eines Grillbetriebs jeweils eine beispielhafte Betriebsfunktion gegeben. Bei einem Kühlgerät oder einem Gefriergerät oder einem Geschirrspüler sind ebenfalls diesbezüglich Betriebsfunktionen vorhanden und bereitgestellt und somit diese Geräte durch entsprechende gegenständliche Komponenten bestückt.

Auch bei einem Kochfeld sind beispielhafte Betriebsfunktionen gegeben, die sich beispielsweise in einer Wischschutzfunktion, in einer Boost-Funktion, in welcher beim Aktivieren sich unverzüglich eine maximale Heizleistungsbereitstellung einer Heizeinheit, die eine zugehörige Kochzone aufheizt, einstellt, eine Timer-Funktion, eine Kochzonenauswahl-Funktion und eine Kochstufeneinstellungsfunktion für eine Kochzone etc. genannt.

Diese Funktionen der beispielhaft genannten Haushaltsgeräte basieren jeweils auf entsprechend gegenständliche Komponenten der Haushaltsgeräte, mittels welchen dann diese Funktionen durchgeführt werden können. Um jedoch dann die jeweils physikalischen Gegebenheiten zu schaffen, die dann mit diesen Betriebsfunktionen erreicht werden, müssen die dafür vorgesehenen gegenständlichen Komponenten, wie beispielsweise Heizkörper, Gebläse, Pumpen, Flüssigkeitsfördereinrichtungen, Kühlmittelkreisläufe, Antriebsmotoren etc. betrieben werden. Dies erfolgt üblicherweise über elektronische Steuergeräte, in denen dann vorzugsweise auch die zum Steuern dieser Komponenten und der damit verbundenen Erreichung der aktiven Betriebsfunktionen benötigten Betriebsprogramme abgelegt sind. Diese Betriebsprogramme definieren dann auch insbesondere beispielsweise einen oder mehrere Betriebsfunktionsparameter. Derartige Parameter können beispielsweise die Zeitdauer, wie lange eine Betriebsfunktion im Gesamten aktiv ablaufen soll, und/oder Zeitintervalle, in denen während einer aktiven Betriebsfunktion Zusatzkomponenten zur Durchführung der Betriebsfunktion des Haushaltsgeräts aktiv sind, sein. Auch die Zeitpunkte, zu denen derartige Komponenten eines Haushaltsgeräts während eines aktiven Ablaufs einer Betriebsfunktion aktiv oder deaktiv sind, werden über derartige Betriebsprogramme vorgegeben. Auch dies betrifft dann beispielsweise wiederum Zeitpunkte und/oder Zeitdauern einer Wassereinspülung, einer Kochstufeneinstellung, einer Gebläsedrehzahl etc.

Es kann vorgesehen sein, dass herstellerseitig das Haushaltsgerät mit zumindest einer Betriebsfunktion ohne zugeordnetes Betriebsprogramm bereitgestellt wird. Diese Betriebsfunktion ist dann zwar im Haushaltsgerät grundsätzlich vorhanden, sie kann jedoch nicht aktiv durchgeführt werden, so lange nicht das zugehörige Betriebsprogramm von einem Nutzer ausgewählt und auf das Haushaltsgerät übertragen wird.

Erst wenn nutzerinitiiert dieses zugehörige Betriebsprogramm dann auf das Steuergerät übertragen wird und dort nutzerseitig installiert wird oder sich selbst automatisch ablaufend installiert, kann dann auch diese grundsätzlich vorhandene Betriebsfunktion des Haushaltsgeräts aktiv genutzt werden und in Betrieb genommen werden beziehungsweise dann auch aktiv ablaufend durchgeführt werden. Durch eine derartige Ausgestaltung ist das Haushaltsgerät grundsätzlich mit einer Vielzahl von Betriebsfunktionen bereitstellbar, und es kann dann vom Nutzer selbst entschieden werden, ob und wann er gegebenenfalls eine derartige Betriebsfunktion auch Beschaffung des zugehörigen Betriebsprogramms aktiv nutzen möchte. Die oben genannten Vorteile werden dadurch bekräftigt.

Vorzugsweise ist vorgesehen, dass das Haushaltsgerät bei einem Erwerbsvorgang eines Nutzers durch diesen Nutzer dann nutzerindividuell durch Auswahl und Übertragung zumindest eines gewünschten Betriebsprogramms für die zugeordnete Betriebsfunktion konfiguriert wird. Ein Erwerbsvorgang kann in dem Zusammenhang der Kauf des Haushaltsgeräts durch den Nutzer oder ein Leasing oder beispielsweise ein Mieten des Haushaltsgeräts sein. Gerade dadurch können auch weitere Vorteile erreicht werden, indem der Nutzer ausführlich über das Gerät und die Möglichkeiten der Betriebsfunktionen und über die Betriebsprogramme aktivierbarer Betriebsfunktionen beraten werden kann. Da üblicherweise gerade in dieser Phase, wenn ein Nutzer ein entsprechendes Haushaltsgerät benötigt und sich für einen Erwerb entschieden hat, auch das Interesse des Nutzers selbst und auch die Fachkompetenz aufgrund des vorhergehenden Informierens am Größten ist, ist auch hier gerade zu diesem Zeitpunkt eine sehr sinnvolle und bedarfsgerechte Konfiguration ermöglicht. Darüber hinaus ist ein weiterer Vorteil darin zu sehen, dass gerade beim Erwerbsvorgang durch eine nutzerindividuelle Konfiguration auch eine diesbezüglich dann vorzugsweise angepasste monetäre Preisbildung für das Haushaltsgerät ermöglicht ist. Dadurch kann sich der Nutzer dann auch im Hinblick auf seine finanziellen Bedürfnisse zum diesbezüglich quasi optimalen Zeitpunkt entsprechend entscheiden und erhält dann auch diesbezüglich die entsprechende Information für seine Entscheidungsfindung.

Vorzugsweise ist vorgesehen, dass der Nutzer bei einem Erwerbsvorgang des Haushaltsgeräts die nutzerseitig gewünschten Betriebsprogramme auswählt und die Betriebsprogramme auf das Steuergerät übertragen werden. Dadurch wird auch hier im Hinblick auf den gesamten Aufwand von Erwerb bis zur nutzerindividuellen Konfiguration der Zeitaufwand minimiert.

Es kann beispielsweise vorgesehen sein, dass der Nutzer einen Erwerb des Haushaltsgeräts in einem Fachgeschäft durchführt und hier somit einen persönlichen Erwerb beim Anbieter vollzieht. Es kann in dem Zusammenhang vorgesehen sein, dass somit im Fachgeschäft beispielsweise ein Terminal zur Verfügung steht, mittels welchem der Nutzer selbst oder ein Fachverkäufer die von dem Nutzer ausgewählten und gewünschten Betriebsprogramme auswählt und dann die Übertragung an das vom Nutzer gewünschte und für den Erwerb vorgesehene Steuergerät überträgt. Es kann hier eine drahtlose oder drahtgebundene Übertragung der haushaltsgeräteexternen Betriebsprogramme auf das Steuergerät erfolgen. In dem Zusammenhang können diese Betriebsprogramme auf dem Auswahlterminal selbst gespeichert sein. Diese Betriebsprogramme können jedoch auch dann wiederum terminalextern gespeichert sein und entsprechend ausgewählt, abgerufen und übertragen werden. Die Auswahl und Übertragung kann sowohl mit als auch ohne eine Internetverbindung beziehungsweise eine Interübertragung erfolgen.

Die korrekte Übertragung der nutzerseitig ausgewählten Betriebsprogramme kann in vielfältiger Weise erfolgen. Lediglich beispielhaft sei hier genannt, dass ein zum Erwerb bereitgestelltes Haushaltsgerät beispielsweise durch eine spezifische Gerätekennnummer charakterisiert ist und beispielsweise durch Eingabe dieser Gerätekennnummer und/oder anderer Geräte spezifizierender Parameter dann auch die korrekte Übertragung der nutzerseitig ausgewählten Betriebsprogramme auf dieses gewünschte Haushaltsgerät erfolgt. Dies ist insbesondere dann vorteilhaft, wenn eine drahtlose Übertragung erfolgen soll. Andererseits kann jedoch zusätzlich oder anstatt dazu auch die Möglichkeit gegeben sein, dass die Übertragung von Betriebsprogrammen auf das zum Erwerb vorgesehene Haushaltsgerät mittels spezifischer Schnittstellen, beispielsweise einer USB-Schnittstelle oder dergleichen, erfolgt. In dem Zusammenhang kann dann ein tragbares Speichermedium direkt an das zum Erwerb vorgesehen Haushaltsgerät gekoppelt werden und in dem Zusammenhang dann eine korrekte Übertragung auf das Gerät erfolgen.

Bei einer weiteren alternativen Möglichkeit kann auch vorgesehen sein, dass der Nutzer den Erwerb nicht persönlich in einem Fachgeschäft vollzieht, sondern sein gewünschtes Haushaltsgerät über einen Online-Shop und somit insbesondere über das Internet durchführt. Bei einem derartigen anbieterfernen beziehungsweise unpersönlichen Erwerb können dann über eine bereitgestellte und aufrufbare Homepage eine Auswahl des gewünschten Geräts und eine Auswahl von Betriebsprogrammen erfolgen. Durch eine dann erfolgende Bestätigung, insbesondere eine Online-Bestätigung, durch den Nutzer wird dann anbieterseitig das Übertragen der Betriebsprogramme auf das Steuergerät zum Steuern des ausgewählten Haushaltsgeräts durchgeführt und ein entsprechend konfiguriertes Haushaltsgerät dann an den Nutzer geliefert.

Wird die Konfiguration beim Erwerbsvorgang durchgeführt, so kann auch vorgesehen sein, dass die Übertragung der ausgewählten Betriebsprogramme automatisch mit der Bestätigung des Erwerbs durch den Nutzer ausgeführt wird. Dies kann sowohl dann erfolgen, wenn in einem Fachgeschäft die Auswahl über ein haushaltsgeräteexternes Terminal erfolgt. Ebenso kann dies jedoch auch bei einem Erwerb des Haushaltsgeräts über das Internet erfolgen. Durch eine derartige automatische Übertragung der Betriebsprogramme insbesondere auch dann zeitlich mit der Bestätigung des Erwerbs beginnend, kann dann eine möglichst schnelle Konfiguration erfolgen. Andererseits kann dann auch die Konfiguration nicht vergessen werden.

Alternativ zu den bereits genannten Möglichkeiten einer Auswahl und Übertragung von nutzerspezifisch gewünschten Betriebsprogrammen kann auch in besonders vorteilhafter Weise vorgesehen sein, dass am Haushaltsgerät selbst ein entsprechendes Terminal vorhanden ist. Dies kann beispielsweise eine Teileinheit einer Bedienvorrichtung des Haushaltsgeräts sein. So kann beispielsweise hier durch Betätigen von Bedienelementen einer Anzeigeeinheit des Haushaltsgeräts dann eine Auswahlmöglichkeit für Betriebsprogramme angezeigt werden. Somit kann dann ein Nutzer oder ein Fachverkäufer am Gerät selbst die Auswahl der gewünschten Betriebsprogramme durchführen und diese dann über einen geräteexternen Speicher, auf den die Betriebsprogramme abgelegt sind, eine Übertragung dieser gewünschten Betriebsprogramme auf ein Steuergerät zum Steuern des Haushaltsgeräts initiieren. Dies ist dahingehend besonders vorteilhaft, dass keine zusätzlichen separaten gegenständlichen Einrichtungen, wie Auswahlterminals in einem Fachgeschäft, erforderlich sind. Darüber hinaus kann bei einer derartigen Ausgestaltung auch dann automatisch die Übertragung der gewünschten Betriebsprogramme auf das korrekte Haushaltsgerät erfolgen. Dies kann insbesondere dahingehend gestaltet sein, dass durch Kommunikation des gewünschten Haushaltsgeräts mit dem geräteexternen Speicher, auf dem die Betriebsprogramme abgelegt sind, auch eine Kennung des spezifischen Haushaltsgeräts automatisch ausgetauscht wird und somit dann selbständig gleich bekannt ist, auf welches Haushaltsgerät die Betriebsprogramme übertragen werden sollen. Auch dadurch ist die Sicherheit der korrekten Übertragung erhöht, da beispielsweise nutzerseitige oder fachverkäuferseitige Eingabefehler einer Kennung, die dann beispielsweise an einem geräteexternen Auswahlterminal eingegeben werden müssten, vermieden werden können.

Insbesondere wird vorgesehen, dass die Betriebsprogramme haushaltsgeräteextern bereitgestellt werden und ein nutzerseitig ausgewähltes Betriebsprogramm drahtlos an das Haushaltsgerät übertragen werden. Zusätzlich oder anstatt dazu kann auch vorgesehen sein, dass die gewünschten Betriebsprogramme haushaltsgeräteextern bereitgestellt werden und ein nutzerseitig ausgewähltes Betriebsprogramm an eine tragbare Steuereinheit als Steuergerät zum Steuern des Haushaltsgeräts übertragen werden. Besonders vorteilhaft ist dies dann, wenn die Steuereinheit ein tragbares Kommunikationsendgerät, beispielsweise ein Mobiltelefon oder ein Tablet-Computer ist, welches dem Nutzer zur Verfügung steht beziehungsweise gehört. Durch diese Ausgestaltung ist das zumindest eine gewünschte Betriebsprogramm zumindest auch auf dieser tragbaren Steuereinheit dann enthalten, und das gewünschte und zum Erwerb vorgesehen Haushaltsgerät kann von dem Nutzer dann auch über diese tragbare Steuereinheit gesteuert werden. Diese Steuereinheit ist dann multifunktionell und kann somit neben seiner grundsätzlichen Funktion, beispielsweise als Telefon oder Tablet-Computer, auch zur Steuerung des Haushaltsgeräts eingesetzt werden. Durch diese tragbare Steuereinheit, die dann auch haushaltsgerätextern angeordnet ist und drahtlos mit dem Haushaltsgerät aufgrund des installierten Betriebsprogramms auf der Steuereinheit kommunizieren kann, ist eine flexiblere und auch wiederum nutzerindividuellere und nutzerfreundlichere Bedienung des Haushaltsgeräts ermöglicht. Auch wenn der Nutzer dann nicht in unmittelbarer Nähe des Haushaltsgeräts, wenn es dann in seinem gewünschten Umgebungsbereich nach der Auslieferung aufgestellt ist, sich befindet, kann eine entsprechende Steuerung des Haushaltsgeräts über diese Steuereinheit erfolgen. Insbesondere können dann in dem Zusammenhang diese nutzerindividuell ausgewählten und übertragenen Betriebsprogramme und die diesbezüglich dann sehr spezifische Konfiguration des Haushaltsgeräts zur nutzerfreundlicheren Bedienung beitragen. Gerade bei einem relativ kleinen kompakten tragbaren Steuergerät beziehungsweise einer entsprechenden Steuereinheit, die ein Mobiltelefon oder ein Tablet-Computer ist, ermöglicht dann eine sehr übersichtliche und nutzerbedarfsgerechte Steuerung des Haushaltsgeräts. Gerade dann ist auch eine sehr fehlerminimierte Betriebsweise des Haushaltsgeräts durch den Nutzer ermöglicht.

Bei den bisher erläuterten Ausführungsbeispielen wird somit bei einem Erwerbsvorgang des Haushaltsgeräts durch einen Nutzer die Konfiguration vollzogen.

Es kann jedoch auch vorgesehen sein, dass zusätzlich oder anstatt dazu erst nach dem Erwerb und somit insbesondere auch bereits nach dem Aufstellen des Haushaltsgeräts beim Nutzer selbst eine Erstkonfiguration oder eine zusätzliche Konfiguration durchgeführt wird. Dies kann dann beispielsweise unmittelbar nach Anlieferung des Haushaltsgeräts beim Nutzer erfolgen und/oder zusätzlich oder anstatt dazu zeitlich später erfolgen, wenn der Nutzer das Gerät bereits in einer spezifischen Zeitdauer verwendet und benutzt hat, jedoch im Hinblick auf seine Bedürfnisse sich die Situation geändert hat und er beispielsweise neue oder weitere Betriebsprogramme zur Ablaufsteuerung von vorhandenen Betriebsfunktionen möchte. Bei einer derartigen Nachrüstung eines bereits ausgelieferten Haushaltsgeräts kann dann die Auswahl und Übertragung der dann gewollten Betriebsprogramme entsprechend den bereits oben genannten Möglichkeiten erfolgen.

Vorzugsweise ist vorgesehen, dass mögliche Betriebsprogramme, die von einem Nutzer individuell ausgewählt werden können, auf einer Internetseite zur Auswahl bereitgestellt werden. Durch diese Ausgestaltung kann sich ein Nutzer bereits im Vorfeld eines Erwerbs umfänglich informieren und kann dies zu gewünschten Zeitpunkten und über eine individuell gewünschte Zeitdauer durchführen. Dadurch wird die Informationstiefe für den Nutzer selbst erhöht. Werden die Betriebsprogramme nicht diesbezüglich bereitgestellt sondern nur in einem Fachgeschäft bereitgestellt und von extern über ein Kommunikationsnetz nicht einsehbar und abrufbar bereitgestellt, ist gegebenenfalls der Informationsaufwand zeitlich und dergleichen erhöht, wenn der Nutzer erst dann im Fachgeschäft sich über die Anzahl, Art und Umfang der möglichen Betriebsprogramme informieren kann.

Vorzugsweise ist vorgesehen, dass der monetäre Preis des gesamten Haushaltsgeräts und somit beispielsweise ein Kaufpreis oder ein Leasingpreis oder ein Mietpreis beim Erwerbsvorgang selbst abhängig von der Anzahl der nutzerseitig ausgewählten Betriebsprogramme und/oder von der Art der nutzerseitig ausgewählten Betriebsprogramme automatisch berechnet wird. Dies ist eine sehr vorteilhafte Ausführung, denn dadurch kann auch eine sehr bedarfsgerechte Preisgestaltung und somit auch eine höhere Variabilität für einen Nutzer geschaffen werden. Der Nutzer kann sich somit nicht nur im Hinblick auf die Betriebsausgestaltung seines gewünschten Haushaltsgeräts individualisieren, sondern er kann in dem Zusammenhang auch im Hinblick auf seine finanziellen Bedürfnisse Informationen erhalten eine bedarfsgerechte Ausgestaltung seines Haushaltsgeräts vollziehen. Indem der Nutzer dies dann unverzüglich beim Erwerbsvorgang mitgeteilt bekommt, kann diesbezüglich die Erwerbsentscheidung sehr zeitminimiert im Hinblick auf den Gesamtinformationsinhalt über das Gerät selbst, die Betriebsprogramme und die Betriebsfunktionen sowie den Preis verglichen werden. Vorzugsweise werden diese variablen monetären Preise dann auch unverzüglich auf einem Bildschirm angezeigt. Vorzugsweise ist vorgesehen, dass vom Nutzer angestrebte Alternativkonfigurationen eines Haushaltsgeräts dann auf dem Bildschirm angezeigt werden, beispielsweise in einer Spalte untereinander oder in einer Reihe nebeneinander. Dadurch ist die Vergleichsmöglichkeit für einen Nutzer im Hinblick auf die Übersichtlichkeit nochmals verbessert.

Vorzugsweise wird vorgesehen, dass die nutzerseitige Auswahl eines Betriebsprogramms und/oder das Übertragen eines ausgewählten Betriebsprogramms an das Steuergerät zumindest phasenweise und somit zumindest in Zeitintervallen während der gesamten Zeitdauer eines Auswahlprozesses und/oder eines Übertragungsprozesses mittels eines nutzereigenen tragbaren Kommunikationsendgeräts durchgeführt wird. Ein derartiges Kommunikationsendgerät ist insbesondere ein Mobiltelefon oder ein Tablet-Computer. Das zumindest phasenweise Durchführen der Auswahl und/oder Übertragung mit einem derartigen tragbaren Kommunikationsendgerät umfasst beispielsweise zumindest das initiieren einer derartigen Auswahl und/oder einer Übertragung, so dass die diesbezügliche Auswahl und insbesondere Übertragung zumindest über dieses tragbare Kommunikationsendgerät gestartet wird.

Vorzugsweise wird vorgesehen, dass die nutzerseitige Auswahl eines Betriebsprogramms und/oder das Übertragen eines ausgewählten Betriebsprogramms an das Haushaltsgerät zumindest phasenweise mittels eines anbieterseitig bereitgestellten Terminals durchgeführt wird und somit mittels eines insbesondere in einem Fachgeschäft bereitgestellten Terminals durchgeführt wird. Dieses Terminal kann haushaltsgeräteextern angeordnet sein, kann jedoch auch an dem Haushaltsgerät selbst angeordnet sein, insbesondere integriert sein. Hier weist dann das Haushaltsgerät vorzugsweise eine Kommunikationsschnittstelle zur Kommunikation mit einem geräteexternen Kommunikationsgerät, auf dem dann auch beispielsweise die Betriebsprogramme abgelegt sind, auf.

Bei einer vorteilhaften Ausführung ist das Steuergerät zum Steuern in dem Haushaltsgerät angeordnet, insbesondere fest eingebaut.

Ein Steuergerät umfasst beispielsweise eine Recheneinheit, eine Auswerteeinheit, einen Speicher, eine Schnittstelle, Sende- und/oder Empfangseinheit, etc.

Besonders vorteilhaft ist es, wenn ein Haushaltsgerät zur Pflege von Wäschestücken mit einer Wäschepflegefunktion als Betriebsfunktion nutzerindividuell konfiguriert wird. Zusätzlich oder anstatt dazu kann auch ein Haushaltsgerät zum Zubereiten von Lebensmitteln mit einer Lebensmittelzubereitungsfunktion als Betriebsfunktion nutzerindividuell konfiguriert werden. Zusätzlich oder anstatt dazu kann ein Haushaltsgerät zum Lagern und Konservieren von Lebensmitteln mit einer Lebensmittellager- und -konservierungsfunktion als Betriebsfunktion nutzerindividuell konfiguriert werden. Zusätzlich oder anstatt dazu kann ein Haushaltsgerät zum Reinigen von Geschirr mit einer Geschirrreinigungsfunktion als Betriebsfunktion nutzerindividuell konfiguriert werden. In dem Zusammenhang sind spezifische Haushaltsgeräte beispielhaft genannt, die in Fachkreisen auch als sogenannte "weiße Ware" bezeichnet werden. Zu diesen Geräten können darüber hinaus auch beispielsweise ein Staubsauger, ein Wasserkocher, ein Kaffeevollautomat, ein Toaster, ein Eierkocher und dergleichen gezählt werden. Nicht umfasst sind von der Erfindung Haushaltsgeräte, die bezüglich der genannten "weißen Ware" nicht darunter zu subsumieren sind. Insbesondere sind dies innerhalb oder auch außerhalb eines Gebäudes nutzbare Geräte, wie Büro-Computer, der zur Datenverarbeitung und Bürotätigkeit vorgesehen ist, oder elektrische Anlagen an Gebäuden, wie Klimaanlagen oder Meldeanlagen, Rauchmeldeanlagen etc.

Des Weiteren betrifft die Erfindung ein Haushaltsgerät, welches mit einer Basisausstattung von Betriebsfunktionen herstellerseitig ausgebildet und bereitgestellt ist. Eine Betriebsfunktion kann jeweils abhängig von zugeordneten und bereitgestellten Betriebsprogrammen ausgeführt und somit im Ablauf gesteuert werden. Das Haushaltsgerät ist derart ausgebildet, dass es durch ein nutzerindividuelles Auswählen zumindest eines Betriebsprogramms zum Ausführen der zugeordneten Betriebsfunktion und durch Übertragen des nutzerseitig bestimmten Betriebsprogramms auf ein Steuergerät zum Steuern des Haushaltsgeräts nutzerindividuell konfigurierbar ist. Dadurch kann nutzerindividuellen Bedürfnissen im Hinblick auf die Ausgestaltung des Haushaltsgeräts und dessen Funktionalität besser Rechnung getragen werden.

Vorteilhafte Ausführungen des erfindungsgemäßen Verfahrens sind als vorteilhafte Ausführungen des erfindungsgemäßen Haushaltsgeräts anzusehen. Dabei weist das Haushaltsgerät entsprechende Komponenten auf, die zum Durchführen der jeweiligen Verfahrensschritte für sich betrachtet oder in Kombination mit anderen Komponenten ausgebildet sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts; und
- Fig. 2: eine schematische Darstellung eines weiteren Ausführungsbeispiels eines erfindungsgemäßen Haushaltsgeräts.

In den Figuren werden gleiche oder funktionsgleiche Elemente mit den gleichen Bezugszeichen versehen.

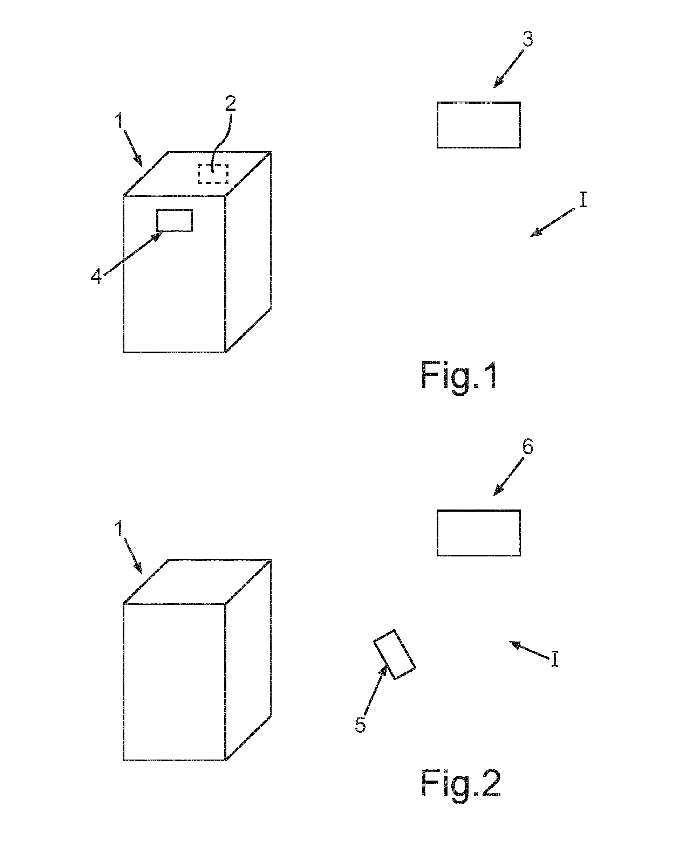

In Fig. 1 ist ein System I gezeigt, welches ein Haushaltsgerät 1 aufweist. Das Haushaltsgerät 1 ist zur Pflege von Wäschestücken oder zur Zubereitung von Lebensmitteln oder zum Reinigen von Geschirr oder Einrichtungsgegenständen oder zum Lagern und Konservieren von Lebensmitteln ausgebildet. Es kann somit beispielsweise eine Waschmaschine oder ein Wäschetrockner oder ein Waschtrockner oder ein Backofen oder ein Mikrowellengargerät oder ein Dampfgargerät oder ein Kochfeld oder ein Geschirrspüler oder ein Kühlschrank oder ein Gefriergerät oder ein Kühl-Gefrier-Kombigerät sein. Das Haushaltsgerät 1 kann auch ein Toaster oder ein Eierkocher oder ein Wasserkocher oder ein Staubsauger oder ein Kaffeevollautomat sein.

Das Haushaltsgerät 1 umfasst zumindest ein Steuergerät 2, mittels welchem Betriebsfunktionen des Haushaltsgeräts 1 im Ablauf gesteuert werden können. Um derartige Betriebsfunktionen im Hinblick auf physikalische Parameter wie die Temperatur, die Strömungsgeschwindigkeit eines Mediums, ein Volumen eines Mediumstroms sowie Zeitpunkte und Zeitdauern von aktiven Phasen und Komponenten des Haushaltsgeräts 1, sowie die Herbeiführung dieser Betriebsfunktionen und physikalischen Parameter, beschreiben zu können, sind Betriebsprogramme erforderlich. Diese sind Steuerprogramme, die beispielsweise in dem Steuergerät 2 abgelegt beziehungsweise abgespeichert sind.

Das Haushaltsgerät 1 ist mit einer Basisausstattung von Betriebsfunktionen herstellerseitig ausgebildet und wird diesbezüglich entsprechend mit dieser Basisausstattung für einen Nutzer zum Erwerb bereitgestellt. Diese Betriebsfunktionen können dann jeweils abhängig von zugeordneten und vorhandenen bereitgestellten Betriebsprogrammen ausgeführt und somit im Ablauf gesteuert werden. Sind diese Betriebsprogramme nicht in einer Steuereinheit zum Steuern des Haushaltsgeräts 1 vorhanden und zur Ausführung mit der Betriebsfunktion verknüpft, so ist diese zwar grundsätzlich in der Basisausstattung vorhandene Betriebsfunktion im Gerät 1 vorhanden, sie kann jedoch nicht aktiv durchgeführt werden. Eine derartige Steuereinheit zum Steuern des Haushaltsgeräts 1 kann das Steuergerät 2, welches vorzugsweise geräteintern angeordnet ist, sein, kann jedoch zusätzlich oder anstatt dazu auch eine tragbare Steuereinheit, beispielsweise ein Kommunikationsendgerät, wie ein Mobiltelefon oder einen Tablet-Computer umfassen, der dann separiert vom Haushaltsgerät 1 angeordnet ist, jedoch mit dem Haushaltsgerät 1 kommunizieren kann.

In dem Ausführungsbeispiel gemäß Fig. 1 ist vorgesehen, dass eine Mehrzahl von in der Basisausstattung vorhandenen Betriebsfunktionen ohne zugeordnetes Betriebsprogramm im Haushaltsgerät 1 bereitgestellt wird. Möchte ein Nutzer dieses Haushaltsgerät 1 dann erwerben, beispielsweise kaufen oder mieten oder leasen, so kann er dieses Haushaltsgerät 1 im Hinblick auf die dann von ihm gewünschten, aktiv durchführbaren Betriebsfunktionen konfigurieren, indem er dann für diese von ihm gewünschten aktiven Betriebsfunktionen die zugeordneten und dafür benötigten Betriebsprogramme nutzerindividuell auswählt und auf ein Steuergerät 2 zum Steuern des Haushaltsgeräts 1 überträgt. Dadurch kann der Nutzer sein zum Erwerb vorgesehenes Haushaltsgerät 1 im Hinblick auf die Anzahl und/oder die Art der aktiven Betriebsfunktionen individuell zusammenstellen und somit quasi auch modulartig beziehungsweise baukastenartig die dann mögliche aktive Funktionalität bezüglich des Betriebs des Haushaltsgeräts anpassen und zusammenstellen.

Es kann dabei vorgesehen sein, dass der Nutzer beim Erwerbsvorgang des Haushaltsgeräts 1 nutzerindividuell durch Auswahl und Übertragung zumindest eines gewünschten Betriebsprogramms für die zugeordnete Betriebsfunktion sein Haushaltsgerät 1 konfiguriert.

Wird der Erwerb des Haushaltsgeräts 1 von einem Nutzer in einem Fachgeschäft vollzogen, kann dort beispielsweise ein extern zum Haushaltsgerät 1 aufgestelltes Terminal 3 zur Verfügung stehen. Über dieses kann dann für das spezifisch ausgewählte und gewünschte Haushaltsgerät 1 eine Anzeige und Auswahlmöglichkeit von Betriebsprogrammen erfolgen, die dann durch den Nutzer ausgewählt werden. Mit der Bestätigung der Auswahl kann dann vorgesehen sein, dass auch die Übertragung der ausgewählten Betriebsprogramme auf das zum Erwerb vorgesehene Haushaltsgerät 1 erfolgt. Dies kann beispielsweise drahtlos erfolgen, indem die Betriebsprogramme, die beispielsweise im Terminal 3 abgelegt und abgespeichert sein können, auf das Steuergerät 2 übersandt werden. Dies ist in einer beispielhaften Ausgestaltung dann dahingehend vorgesehen, dass diese Betriebsprogramme, die ausgewählt wurden, an das Steuergerät 2 übersandt werden und in einem steuergeräteseitigen Speicher oder in einem anderweitigen Speicher des Haushaltsgeräts 1 abgelegt werden, und dabei auch nuterzindividuell oder automatisch dort installiert werden.

Es kann jedoch auch vorgesehen sein, dass das Haushaltsgerät 1 einen geräteinternen Terminal 4 aufweist, mit dem die Auswahl von möglichen Betriebsprogrammen durch einen Nutzer erfolgen kann. Ist dies erfolgt, kann dann über eine Kommunikationsschnittstelle, die ebenfalls drahtlos sein kann, die Übertragung der über das Terminal 4 ausgewählten Betriebsprogramme zum Steuergerät 2 erfolgen. Insbesondere erfolgt diese Übertragung an eine Empfangsschnittstelle des Haushaltsgeräts 1 und wird dann von dort an den Speicher des Steuergeräts 2 oder einen anderen Speicher weitergeleitet. Die Betriebsprogramme, die nach Auswahl über das Terminal 4 auf das Haushaltsgerät 1 übertragen werden, können an dem Terminal 3 abgelegt beziehungsweise gespeichert sein. Sie können jedoch aber auch an einer Einheit beziehungsweise auf einer zum Fachgeschäft, in dem das Haushaltsgerät 1 angebotenen externen Einheit abgelegt sein, die zur Kommunikation mit dem Haushaltsgerät 1 und/oder dem Terminal 3 ausgebildet ist. Das Terminal 4 kann Bestandteil einer Bedien- und Anzeigevorrichtung des Haushaltsgeräts 1 sein.

Ebenso kann vorgesehen sein, dass ein Nutzer sein zum Erwerb vorgesehenes Haushaltsgerät 1 nicht in einem Fachgeschäft erwirbt, sondern über einen Online-Shop, insbesondere über das Internet, erwirbt. Dort kann über eine Internetseite dann die Auswahl der möglichen Betriebsprogramme erfolgen und nach Bestätigung der Auswahl und Bestätigung des Erwerbs durch den Nutzer kann dann vorzugsweise die Übertragung der Betriebsprogramme auf das erworbene, jedoch noch nicht an den Nutzer ausgelieferte Haushaltsgerät 1 erfolgen. Dies kann bei einer derartigen Erwerbssituation dann von dem Anbieter initiiert werden oder kann automatisch erfolgen. Das dann diesbezüglich vollständig konfigurierte Haushaltsgerät 1 wird dann an den Nutzer ausgeliefert.

Vorzugsweise ist vorgesehen, dass beim Erwerbsvorgang des Haushaltsgeräts 1 durch einen Nutzer abhängig von der Anzahl und/oder Art der nutzerspezifisch gewünschten Betriebsprogramme ein monetärer Preis des Haushaltsgeräts 1 insbesondere automatisch bestimmt wird und automatisch dem Nutzer angezeigt wird. Die Anzeige dieses diesbezüglich variierenden monetären Preises des Haushaltsgeräts 1 kann an dem Terminal 3 oder dem Terminal 4 oder einem tragbaren Steuergerät angezeigt werden.

Das Terminal 3 kann ein Terminal sein, welches mit dem Internet verbunden ist oder verbindbar ist und zum Auswählen und Übertragen der Betriebsprogramme mit dem Internet verbunden ist. Das Terminal 3 kann jedoch auch ein von dem Internet entkoppeltes Gerät sein.

In Fig. 2 ist ein weiteres Ausführungsbeispiel eines Systems I gezeigt. In dieser beispielhaften Ausführung kann das Haushaltsgerät 1 ebenfalls wieder nutzerindividuell im Hinblick auf die aktiv gewünschten Betriebsfunktionen konfiguriert werden und dazu nutzerdefiniert zugeordnete Betriebsprogramme für die gewünschten aktiven Betriebsfunktionen ausgewählt und übertragen werden. Es kann vorgesehen sein, dass sowohl die Auswahl und/oder das Übertragen der Betriebsprogramme mittels eines tragbaren Steuergeräts 5 erfolgt, welches insbesondere ein nutzereigenes tragbares Kommunikationsendgerät, insbesondere ein Mobiltelefon oder ein Tablet-Computer, ist. Es kann vorgesehen sein, dass die ausgewählten und gewünschten Betriebsprogramme von einer bereitgestellten Einheit 6, die sowohl extern zum Haushaltsgerät 1 als auch extern zum Steuergerät 5, ist, auf das Steuergerät 5 und/oder das Haushaltsgerät 1 übertragen werden. In dem Zusammenhang kann somit das Auswahlprocedere und/oder das Übertragungsprocedere der Betriebsprogramme über dieses tragbare Steuergerät gesteuert werden. Sind zumindest einige gewünschte und ausgewählte Betriebsprogramme dann auch final auf diesem tragbaren Steuergerät 5 abgespeichert, so kann die Steuerung des Haushaltsgeräts 1 im Hinblick auf die dann nutzerspezifisch gewünschten aktiven Betriebsfunktionen auch über das tragbare Steuergerät 5 gesteuert werden.

Die erläuterten Ausführungen zur Auswahl und Übertragung von Betriebsprogrammen als auch zur Steuerung des Haushaltsgeräts 1 können in einzelnen Merkmalen oder in Merkmalskombinationen auch kombiniert werden und somit weitere Ausführungsbeispiele diesbezüglich gebildet werden, die als offenbart anzusehen sind.

### Bezugszeichenliste

- 1: Haushaltsgerät
- 2: Steuergerät
- 3: geräteexterner Terminal
- 4: geräteinterner Terminal
- 5: tragbares Steuergerät
- 6: Einheit

## Patentansprüche

1. Verfahren zum Konfigurieren eines Haushaltsgeräts (1), bei welchem das Haushaltsgerät (1) mit einer Basisausstattung von Betriebsfunktionen herstellerseitig bereitgestellt wird, und Betriebsfunktionen jeweils abhängig von zugeordneten bereitgestellten Betriebsprogrammen aktiv ausgeführt werden können, **dadurch gekennzeichnet, dass** das Haushaltsgerät (1) durch ein nutzerindividuelles Auswählen zumindest eines Betriebsprogramms zum Ausführen der zugeordneten Betriebsfunktion und durch Übertragen des nutzerseitig bestimmten Betriebsprogramms auf ein Steuergerät (2, 5) zum Steuern des Haushaltsgeräts (1) konfiguriert wird.

2. Verfahren nach Anspruch 1, **dadurch gekennzeichnet, dass** herstellerseitig das Haushaltsgerät (1) zumindest mit einer Betriebsfunktion ohne zugeordnetes Betriebsprogramm bereitgestellt wird.

3. Verfahren nach Anspruch 1 oder 2, **dadurch gekennzeichnet, dass** das Haushaltsgerät (1) beim Erwerbsvorgang durch einen Nutzer nutzerindividuell durch Auswahl und Übertragung zumindest eines gewünschten Betriebsprogramms für die zugeordnete Betriebsfunktion konfiguriert wird.

4. Verfahren nach Anspruch 3, **dadurch gekennzeichnet, dass** das Haushaltsgerät (1) erst im nutzerindividuell fertig konfigurierten Zustand ausgeliefert wird.

5. Verfahren nach Anspruch 3 oder 4, **dadurch gekennzeichnet, dass** die Übertragung automatisch mit der elektronischen Bestätigung des Erwerbs in einer Eingabemaske an einem Bildschirm durch den Nutzer ausgeführt wird.

6. Verfahren nach Anspruch 3 oder 4, **dadurch gekennzeichnet, dass** die Übertragung nach der Bestätigung des Erwerbs durch den Nutzer durch den Anbieter des Haushaltsgeräts (1) durchgeführt wird.

7. Verfahren nach einem der vorhergehenden Ansprüche, **dadurch gekennzeichnet, dass** nach dem Erwerb und nach dem örtlich anbieterfernen Aufstellen des Haushaltsgeräts (1) durch einen Nutzer eine nutzerindividuelle Konfiguration durch Übertragen zumindest eines nutzerspezifisch ausgewählten Betriebsprogramms durchgeführt wird.

8. Verfahren nach einem der vorhergehenden Ansprüche, **dadurch gekennzeichnet, dass** die Betriebsprogramme haushaltsgeräteextern bereitgestellt werden und ein nutzerseitig ausgewähltes Betriebsprogramm an ein haushaltsgeräteintern angeordnetes Steuergerät (2) und/oder ein tragbares, haushaltsgeräteextern angeordnetes Steuergerät (5), insbesondere ein nutzereigenes Kommunikationsendgerät, zum Steuern des Haushaltsgeräts (1) übertragen werden.

9. Verfahren nach einem der vorhergehenden Ansprüche, **dadurch gekennzeichnet, dass** Betriebsprogramme auf einer Internetseite zur Auswahl angezeigt werden.

10. Verfahren nach einem der vorhergehenden Ansprüche, **dadurch gekennzeichnet, dass** Betriebsprogramme auf einem vom Internet entkoppelten Auswahlterminal (3) zur Auswahl bereitgestellt werden.

11. Verfahren nach einem der vorhergehenden Ansprüche, **dadurch gekennzeichnet, dass** der monetäre Preis des gesamten Haushaltsgeräts (1) beim Erwerbsvorgang abhängig von der Anzahl der nutzerseitig ausgewählten Betriebsprogramme und/oder der Art der nutzerseitig ausgewählten Betriebsprogramme automatisch berechnet wird, insbesondere auf einem Bildschirm angezeigt wird.

12. Verfahren nach einem der vorhergehenden Ansprüche, **dadurch gekennzeichnet, dass** die nutzerseitige Auswahl eines Betriebsprogramms und/oder das Übertragen eines ausgewählten Betriebsprogramms zumindest phasenweise mittels eines nutzereigenen tragbaren Kommunikationsendgeräts, insbesondere ein Mobiltelefon oder einen Tablet-Computer, durchgeführt wird.

13. Verfahren nach einem der vorhergehenden Ansprüche, **dadurch gekennzeichnet, dass** die nutzerseitige Auswahl eines Betriebsprogramms und/oder das Übertragen eines ausgewählten Betriebsprogramms zumindest phasenweise mittels eines anbieterseitig bereitgestellten Terminals (3) durchgeführt wird.

14. Verfahren nach einem der vorhergehenden Ansprüche, **dadurch gekennzeichnet, dass** ein Haushaltsgerät (1) zur Pflege von Wäschestücken mit einer Wäschepflegefunktion als Betriebsfunktion nutzerindividuell konfiguriert wird und/oder ein Haushaltsgerät (1) zum Zubereiten von Lebensmitteln mit einer Lebensmittelzubereitungsfunktion als Betriebsfunktion nutzindividuell konfiguriert wird und/oder ein Haushaltsgerät (1) zum Lagern und Konservieren von Lebensmitteln mit einer Lebensmittellager- und Konservierungsfunktion als Betriebsfunktion nutzerindividuelle konfiguriert wird und/oder ein Haushaltsgerät (1) zum Reinigen von Geschirr oder Einrichtungsgegenständen mit einer Reinigungsfunktion als Betriebsfunktion nutzerindividuell konfiguriert wird.

15. Haushaltsgerät (1), welches mit einer Basisausstattung von Betriebsfunktionen herstellerseitig ausgebildet und bereitgestellt ist, und Betriebsfunktionen jeweils abhängig von zugeordneten bereitgestellten Betriebsprogrammen ausgeführt werden können, **dadurch gekennzeichnet, dass** das Haushaltsgerät (1) derart ausgebildet ist, dass es durch ein nutzerindividuelles Auswählen zumindest eines Betriebsprogramms zum Ausführen der zugeordneten Betriebsfunktion und durch Übertragen des nutzerseitig bestimmten Betriebsprogramms auf ein Steuergerät (2, 5) zum Steuern des Haushaltsgeräts (1) nutzerindividuell konfigurierbar ist.
